## Europäisches Patentamt

## European Patent Office

## Office européen des brevets

(19)

(11) Veröffentlichungsnummer: **0 017 194 B1**

# EUROPÄISCHE PATENTSCHRIFT

(12)

(45) Veröffentlichungstag der Patentschrift:
07.09.83

(21) Anmeldenummer: 80101684.1

(22) Anmeldetag: 28.03.80

(51) Int. Cl.³: **F 16 D 13/75**, F 16 D 65/72, F 15 B 21/00

(54) Selbsttätig wirkende Einrichtung zum Ein- und Nachstellen des toten Spiels einer hydraulisch betätigten Vorrichtung.

(30) Priorität: 05.04.79 HU CE001210

(43) Veröffentlichungstag der Anmeldung:
15.10.80 Patentblatt 80/21

(45) Bekanntmachung des Hinweises auf die Patenterteilung:
07.09.83 Patentblatt 83/36

(84) Benannte Vertragsstaaten:
AT DE FR GB IT SE

(56) Entgegenhaltungen:
DE-A-2 256 249
DE-B-1 289 689
DE-B-2 140 516
FR-A-2 038 313
GB-A-1 038 832
GB-A-1 071 375
HU-B-169 345
US-A-3 756 361
US-A-4 057 134
US-A-4 057 135

(73) Patentinhaber: Csepel Autogyár,
H-2311 Szigetszentmiklos (HU)

(72) Erfinder: Töröcsik, Lászlò, Kakukk u. 10/b,
H-1126 Budapest (HU)
Erfinder: Geiger, Gyula, Marx Károly u. 131,
H-1202 Budapest (HU)

(74) Vertreter: Lehn, Werner, Dipl.-Ing. et al, Hoffmann, Eitle
& Partner Patentanwälte Arabellastrasse 4 (Sternhaus),
D-8000 München 81 (DE)

## Selbsttätig wirkende Einrichtung zum Ein- und Nachstellen des toten Spiels einer hydraulisch betätigten Vorrichtung

Die Erfindung betrifft eine selbsttätig wirkende Einrichtung zum Ein- und Nachstellen des toten Spiels einer hydraulisch betätigten Vorrichtung, insbesondere Kupplung oder Bremse, auf einen vorgeschriebenen Wert.

Bei einem Teil von hydraulisch betätigten Vorrichtungen ist es wegen der Funktionssicherheit und aus sonstigen Gründen zweckmäßig, eventuell sogar unabdingbar notwendig, daß die Vorrichtung unabhängig vom Verschleiß spielfrei ist oder das tote Spiel auf einem konstanten Wert gehalten wird. Die letztere Forderung besteht insbesondere für Kupplungen und Bremsen.

Es sind bereits verschiedene Einrichtungen zum Ein- und Nachstellen des toten Spiels bekannt. Diese nehmen das Nachstellen jedoch ausnahmslos mit mechanischen Elementen vor. Solche Einrichtungen sind zum Beispiel in der ungarischen Patentschrift 169 345, der DE-B-1 289 689 und den US-A-4 057 134 sowie US-A-4 057 135 beschrieben. Der gemeinsame Nachteil dieser Konstruktionen besteht darin, daß sie — da sie auf mechanischem Wege wirken — selbst dem Verschleiß unterliegen und sich infolgedessen auch ihre Wirkungsweise ändert. Außerdem sind sie kompliziert, so daß ihre Herstellung teuer ist.

Hier will die Erfindung Abhilfe schaffen. Die Erfindung, wie sie in den Ansprüchen gekennzeichnet ist, löst die Aufgabe, eine selbsttätig wirkende Einrichtung zum Ein- und Nachstellen des toten Spiels von hydraulisch betätigten Einrichtungen zu schaffen, bei der die sich aus mechanischen Elementen ergebenden Fehler nicht vorkommen können.

Die erfindungsgemäße Einrichtung ist gekennzeichnet durch einen in die Druckleitung von dem die Vorrichtung steuernden Element zum hydraulischen Arbeitszylinder der Vorrichtung einsetzbaren Druckübersetzer, dessen Zylinderraum großen Querschnitts mit dem steuernden Element und dessen Zylinderraum kleinen Querschnitts mit dem hydraulischen Arbeitszylinder verbindbar sind, wobei zwischen den beiden Zylinderräumen wenigstens ein Kanal vorgesehen ist, der von einer in Schließrichtung durch eine Feder belasteten Ventileinrichtung derart gesteuert ist, daß er in der Grundstellung des Druckübersetzerkolbens geschlossen ist, bei Druckbeaufschlagung des Druckübersetzers durch das steuernde Element nach einer Verschiebung des Druckübersetzerkolbens aus der Grundstellung um einen vorgegebenen Weg, der proportional dem vorgeschriebenen Wert des toten Spiels ist, offen ist und bei Druckentlastung dann geschlossen wird, wenn der Druckübersetzerkolben um den vorgegebenen Weg von seiner Grundstellung entfernt ist.

Bei hydraulisch betätigten Vorrichtungen ist in jedem einzelnen Punkt der Verschiebung der Vorrichtung der dazugehörige Druckwert unabhängig vom Verschleiß der Vorrichtung konstant. Die jeweilige Funktionsstellung der Vorrichtung kann demnach in jedem Augenblick auch hydraulisch wahrgenommen werden. Ein im Druckbereich gekennzeichneter Wert kann daher als hydraulisches Signal benutzt und zum Einstellen des toten Spiels auf den vorgeschriebenen Wert herangezogen werden.

Gemäß einer bevorzugten Ausführungsform der Erfindung sind die beiden Zylinderräume durch ein abgestuftes Zylindergehäuse gebildet und ist der Druckübersetzerkolben als Stufenkolben ausgebildet.

Weiterhin ist es vorteilhaft, daß der Kanal durch den Druckübersetzerkolben verläuft und ein federbelastetes, normal den Durchfluß vom Zylinderraum großen Querschnitts zum Zylinderraum kleinen Querschnitts sperrendes, in Abhängigkeit von der Stellung des Druckübersetzerkolbens mechanisch aufsteuerbares Rückschlagventil aufweist und daß der Druckübersetzerkolben durch eine Feder in Richtung seiner Grundstellung belastet ist.

Gemäß einer bevorzugten Ausführungsform der Erfindung ist es zweckmäßig, daß zwischen den beiden Zylinderräumen zwei Kanäle vorgesehen sind und jeder der beiden Kanäle ein federbelastetes Rückschlagventil aufweist, wobei das eine Rückschlagventil den Durchfluß vom Zylinderraum großen Querschnitts zum Zylinderraum kleinen Querschnitts und das andere Rückschlagventil den Durchfluß vom Zylinderraum kleinen Querschnitts zum Zylinderraum großen Querschnitts sperrt und die Aufsteuerung der Rückschlagventile ausschließlich differenzdruckabhängig ist. Dabei ist es vorteilhaft, daß der das eine Rückschlagventil aufweisende Kanal durch den Druckübersetzerkolben und der das andere Rückschlagventil aufweisende Kanal durch das Schließglied des einen Rückschlagventils verläuft.

Ferner ist es vorteilhaft, daß der Kanal über eine radiale Öffnung im Zylindergehäuse vom Zylinderraum größeren Querschnitts abzweigt und die Öffnung vom Druckübersetzerkolben, der von einer Feder in Richtung seiner Grundstellung belastet ist, in Abhängigkeit von seiner Stellung verschlossen oder freigegeben wird.

Die erfindungsgemäße Einrichtung stellt das tote Spiel der hydraulisch betätigten Vorrichtung automatisch und stufenlos auf den gewünschten Wert ein beziehungsweise nach. Die Einstellung erfolgt hydraulisch. Die Parameter der Nachstelleinrichtung ändern sich im Laufe der Benutzung nicht, weil die vom Verschleiß der Einzelteile verursachte Veränderung vernachlässigbar gering ist. Die Einrichtung ist einfach aufgebaut und daher einfach herstellbar. Sie hat weiterhin den Vorteil, daß sie als selbständige Einheit hergestellt und auch nachträglich in bereits bestehende hydraulische Systeme eingebaut werden kann.

In der folgenden Beschreibung wird die Erfindung anhand der mehrere Ausführungswege darstellenden Zeichnung näher erläutert. Es zeigt

Fig. 1 ein Kupplungssystem eines Kraftfahrzeugs und eine eingebaute Einrichtung zum Einstellen des toten Spiels in schematischer Darstellung,

Fig. 2 und 3 je eine bevorzugte Ausführungsform der erfindungsgemäßen Einrichtung.

Der einen größeren Querschnitt aufweisende Zylinderraum 2 eines hydraulischen Druckübersetzers 1 ist über eine Rohrleitung mit einem von einem Kupplungspedal betätigbaren, den Druckübersetzer 1 steuernden Element 12, z. B. einem Geberzylinder, verbunden.

Der den kleineren Querschnitt aufweisende Zylinderraum 3 steht über eine Rohrleitung mit einem Arbeitsraum eines die Kupplung lösenden Arbeitszylinders 13 in Verbindung. Ein sich in den Zylinderräumen bewegender Stufenkolben 4, 4' ist durch Dichtungsringe 5 und 6 abgedichtet. Die Zylinderräume 2 und 3 sind über einen durch den Stufenkolben hindurchgeführten Kanal 7 miteinander verbunden. Ein Ventil 8 schließt den Kanal ab. Das Ventil, dessen Schaft in dem Gehäuse des Druckübersetzers 1 geführt ist, wird durch eine Feder 9 an den Stufenkolben 4, 4' angepreßt. Am anderen Ende des in dem Gehäuse geführten Ventilschaftes befindet sich ein Anschlag 10. Der Stufenkolben wird von einer Feder 11 in Grundstellung gehalten. Das ganze System ist mit Flüssigkeit gefüllt.

Im Ruhezustand des Systems ist zwischen einem Kupplungslager 16 und Steuerarmen 17 der Kupplung ein vorgeschriebener Spalt a vorgesehen. Bei Betätigung strömt durch Drücken des Kupplungspedals aus dem Geberzylinder 12 Flüssigkeit in den Raum 2 und bewegt den Stufenkolben 4, 4', dem das Ventil 8 folgt. Der Stufenkolben mit dem vorläufig verschlossenen Kanal 7 schiebt die Flüssigkeit aus dem Raum 3 in den Arbeitszylinder 13, wodurch über die Schubstange 14 und den Verbindungshebel 15 mit der Verschiebung des Kupplungslagers 16 das Lösen der Kupplung (das Auskuppeln) beginnt. Zuerst verschwinden der Spalt a, und das Spiel zwischen den übertragenden Teilen, die Betätigungseinrichtung beginnt unter Druck zu stehen, und die Kupplung ist bereit zum eigentlichen Auskuppeln. Mit dem weiteren Anstieg des Druckes verschiebt sich der Stufenkolben weiter. Sobald das Ventil 8 den Weg »b« zurückgelegt hat und der Anschlag 10 am Druckübersetzergehäuse anschlägt, entfernt sich der Stufenkolben vom Ventil 8 und die Flüssigkeit strömt aus dem Zylinder 12 durch den Kanal 7 in den Arbeitszylinder 13, d. h., die Kupplung wird gelöst bzw. ausgekuppelt.

Beim Schließen der Kupplung werden die Druckplatte und der gesamte Aushebemechanismus von den Kupplungsfedern bzw. einer Rückholfeder 18 in die Grundstellung zurückgedrückt. Die Flüssigkeit wird aus dem Arbeitszylinder 13 in den Zylinder 12 zurückgedrängt. Mit dem Absinken des Druckes wird der Stufenkolben 4, 4' von der Feder 11 in seine Grundstellung geschoben. Sobald die Druckplatte der Kupplung den Reibteller und dieser das Schwungrad erreicht hat, fällt der Flüssigkeitsdruck plötzlich ab. Bei dem gewählten und den Maßen der Vorrichtung entsprechenden Druck erreicht der Stufenkolben das Ventil 8, und der Kanal 7 wird geschlossen. Danach wird von dem Stufenkolben nur noch eine bestimmte Flüssigkeitsmenge aus dem Arbeitszylinder herausgelassen. Bei völligem Loslassen des Kupplungspedals kehrt der Stufenkolben in seine Ausgangsstellung zurück. Dabei nimmt der Spalt a einen Wert an, der der zu dem geschlossenen Zustand des Kanals 7 gehörenden Verschiebung b proportional ist. Der Wert des Abschnittes b ist konstant. Die Übersetzungen sind ebenfalls konstant, weshalb auch der Wert a konstant bleibt.

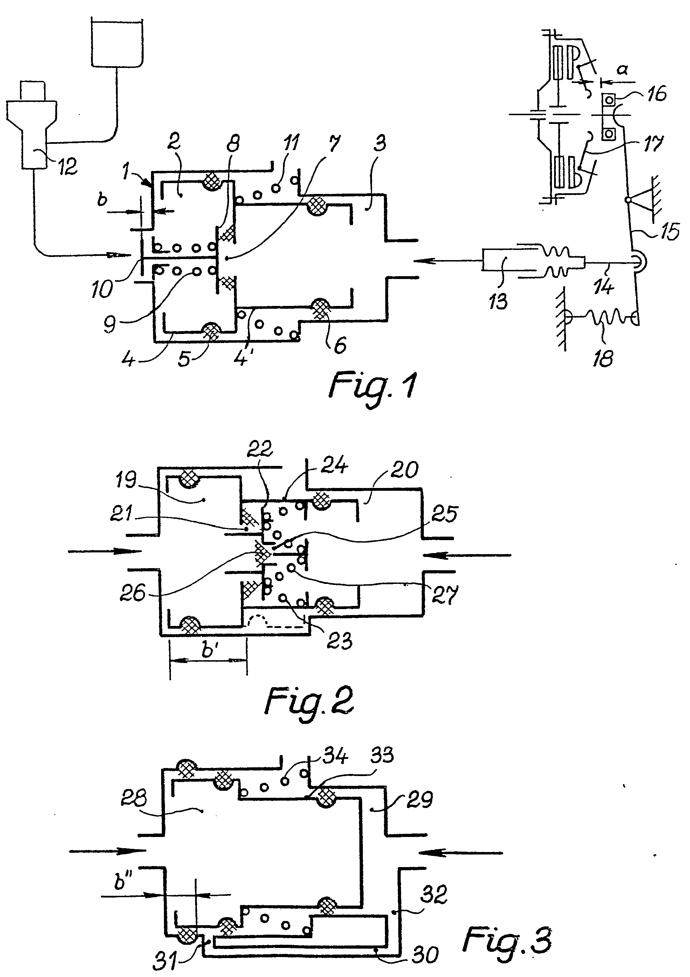

Bei der in Fig. 2 gezeigten Ausführungsform sind die beiden Räume 19 und 20 des Druckübersetzers durch zwei Kanäle 21, 25 verbunden. Der Kanal 21 ist im Stufenkolben 24 ausgebildet und wird von einem die Strömung in Richtung des Raumes 20 freigebenden Rückschlagventil 22 verschlossen, das eine schwache Feder 23 aufweist. Der Kanal 25 ist in dem Rückschlagventil 22 ausgebildet und wird von einem die Strömung in den Raum 19 freigebenden Rückschlagventil 26 verschlossen. Das Rückschlagventil 26 wird von einer vorgespannten Feder 27 in geschlossenem Zustand gehalten.

Die Funktion dieser Ausführungsform ist ähnlich der bereits beschriebenen. Beim Lösen der Kupplung gelangt der Stufenkolben 24 in die durch eine gestrichelte Linie angedeutete äußerste Stellung. Beim Einkuppeln strömt die Flüssigkeit durch den Kanal 25 aus dem Arbeitszylinder zurück in den (hier nicht dargestellten) Zylinder 12. Bei einem gewählten Druck, der stets größer ist als der Druck der Rückholfeder 18 der Vorrichtung, die die Kupplung betätigt, schließt das Rückschlagventil 26 und der Stufenkolben 24 kehrt in seine Grundstellung zurück. Der Spalt a ist dem zwischen den beiden äußersten Stellungen des Stufenkolbens liegenden Abschnitt b' proportional.

Bei der Ausführungsform gemäß Fig. 3 ist der die Zylinderräume 28 und 29 verbindende Kanal 30 durch in der Wand des Druckübersetzers ausgebildete Öffnungen 31 und 32 mit dem entsprechenden Zylinderraum verbunden. Der Stufenkolben 33 wird von einer Feder 34 in seiner Grundstellung gehalten.

Die Funktion ist ähnlich der bereits beschriebenen. Der Kanal 30 wird nach dem Freiwerden bzw. Verdecken der Öffnung 31 von dem Stufenkolben 33 selbst geöffnet bzw. geschlossen. Der Spalt a ist der Verschiebung zwischen der Grundstellung des Stufenkolbens und dem Freiwerden der Öffnung 31, d. h. dem Abschnitt b'' proportional.

Die hier beschriebenen Ausführungsformen können auch kombiniert werden. So kann z. B.

das in Fig. 2 dargestellte Ventil in einen Kanal gemäß Fig. 3 eingebaut sein. Zylinder und Kolben müssen nicht unbedingt als Stufenzylinder bzw. Stufenkolben ausgebildet sein. Es können jederzeit auch zwei einfache Zylinder zu einem Druckübersetzer kombiniert werden.

Mit einer Nachstelleinrichtung der erfindungsgemäßen Art kann auch ein spielfreier Zustand eingestellt werden. Dies ist durch geeignete Wahl der Charakteristik der Feder möglich, die das den Rückfluß aus dem kleineren Raum in den größeren gestattende Schließelement schließt. Auch bei b = 0 (entsprechende Konstruktion) ist kein Spiel vorhanden.

Mit der erfindungsgemäßen Einrichtung kann das tote Spiel automatisch eingestellt und auf dem vorgeschriebenen Wert gehalten werden. Da die Einrichtung keine schnell verschleißenden Teile aufweist, ändern sich seine Parameter im Laufe der Benutzung nicht, d. h., die Einrichtung ist vollkommener als die bisher bekannten Lösungen. Die Nachstelleinrichtung kann als selbständige Einheit ausgebildet sein und auf das Steuerelement 12 des hydraulischen Systems oder auch auf den Arbeitszylinder 13 montiert werden. Die Einrichtung kann auch nachträglich in bereits bestehende Systeme eingebaut werden.

## Patentansprüche

1. Selbsttätig wirkende Einrichtung zum Ein- und Nachstellen des toten Spiels (a) einer hydraulisch betätigten Vorrichtung (13 – 18), insbesondere Kupplung oder Bremse, auf einen vorgeschriebenen Wert, gekennzeichnet durch einen in die Druckleitung von dem die Vorrichtung (13 – 18) steuernden Element (12) zum hydraulischen Arbeitszylinder (13) der Vorrichtung (13 – 18) einsetzbaren Druckübersetzer (1), dessen Zylinderraum großen Querschnitts (2, 19, 28) mit dem steuernden Element (12) und dessen Zylinderraum kleinen Querschnitts (3, 20, 29) mit dem hydraulischen Arbeitszylinder (13) verbindbar sind, wobei zwischen den beiden Zylinderräumen (2, 3; 19, 20; 28, 29) wenigstens ein Kanal (7; 21, 25; 31) vorgesehen ist, der von einer in Schließrichtung durch eine Feder (9; 23, 27; 34) belasteten Ventileinrichtung (8; 22, 26; 33,31) derart gesteuert ist, daß er in der Grundstellung des Druckübersetzerkolbens (4, 4''; 24; 33) geschlossen ist, bei Druckbeaufschlagung des Druckübersetzers durch das steuernde Element (12) nach einer Verschiebung des Druckübersetzerkolbens aus der Grundstellung um einen vorgegebenen Weg (b, b', b''), der proportional dem vorgeschriebenen Wert des toten Spiels (a) ist, offen ist und bei Druckentlastung dann geschlossen wird, wenn der Druckübersetzerkolben (4, 4''; 24, 33) um den vorgegebenen Weg (b, b', b'') von seiner Grundstellung entfernt ist.

2. Einrichtung nach Anspruch 1, dadurch gekennzeichnet, daß die beiden Zylinderräume (2, 3; 19, 20; 28, 29) durch ein abgestuftes Zylindergehäuse gebildet sind und der Druckübersetzerkolben (4, 4'; 24; 33) als Stufenkolben ausgebildet ist.

3. Einrichtung nach Anspruch 1 oder 2, dadurch gekennzeichnet, daß der Kanal (7) durch den Druckübersetzerkolben (4, 4') verläuft und ein federbelastetes, normal den Durchfluß vom Zylinderraum großen Querschnitts (2) zum Zylinderraum kleinen Querschnitts (3) sperrendes, in Abhängigkeit von der Stellung des Druckübersetzerkolbens mechanisch aufsteuerbares Rückschlagventil (8 – 10) aufweist und daß der Druckübersetzerkolben (4, 4') durch eine Feder (11) in Richtung seiner Grundstellung belastet ist.

4. Einrichtung nach Anspruch 1 oder 2, dadurch gekennzeichnet, daß zwischen den beiden Zylinderräumen (19, 20) zwei Kanäle (21, 25) vorgesehen sind und jeder der beiden Kanäle ein federbelastetes Rückschlagventil (22, 23; 26, 27) aufweist, wobei das eine Rückschlagventil (22, 23) den Durchfluß vom Zylinderraum großen Querschnitts (19) zum Zylinderraum kleinen Querschnitts (20) und das andere Rückschlagventil (26, 27) den Durchfluß vom Zylinderraum kleinen Querschnitts (20) zum Zylinderraum großen Querschnitts (19) sperrt und die Aufsteuerung der Rückschlagventile ausschließlich differenzdruckabhängig ist.

5. Einrichtung nach Anspruch 4, dadurch gekennzeichnet, daß der das eine Rückschlagventil (22, 23) aufweisende Kanal (21) durch den Druckübersetzerkolben (24) und der das andere Rückschlagventil (26, 27) aufweisende Kanal (25) durch das Schließglied (22) des einen Rückschlagventils (22, 23) verläuft.

6. Einrichtung nach Anspruch 1 oder 2, dadurch gekennzeichnet, daß der Kanal (30) über eine radiale Öffnung (31) im Zylindergehäuse vom Zylinderraum größeren Querschnitts (28) abzweigt und die Öffnung (31) vom Druckübersetzerkolben (33), der von einer Feder (34) in Richtung seiner Grundstellung belastet ist, in Abhängigkeit von seiner Stellung verschlossen oder freigegeben wird.

## Claims

1. An automatically acting mechanism for setting and adjusting the lost motion (a) of a hydraulically actuated device (13 – 18), in particular a clutch or a brake, to a predetermined value, characterized by a pressure-transfer means (1), which is insertable into the pressure line from the element (12) controlling the device (13 – 18) to the hydraulic working cylinder (13) of the device (13 – 18), the cylinder chamber of which pressure-transfer means of large cross-section (2, 19, 28) being connectible with the control element (12), and its cylinder chamber of small cross-section (3, 20, 29) being connectible with the hydraulic working cylinder (13), at least one duct (7; 21, 25; 31) being provided between the two cylinder chambers (2, 3; 19, 20; 28, 29), which duct is controlled by a valve means (8; 22, 26; 311, 31), biassed in the closing direction by a spring (9; 23, 27; 34), in such manner that, in the normal position of the pressure-transfer piston (4, 4''; 24; 33), the duct is closed and, upon pressurizing of the pressure-transfer means by the control element (12) and following displacement of the pressure-transfer piston from the normal position over a predetermined distance (b, b', b''), which is proportional to the predetermined value of the lost motion (a), the duct is opened and is then closed upon relaxation of pressure when the pressure-transfer piston (4, 4''; 24, 33) is removed from its normal position over the predetermined distance (b, b', b'').

2. A mechanism according to Claim 1, characterized in that the two cylinder chambers (2, 3; 19, 20; 28, 29) are formed by a stepped cylinder block, and the pressure-transfer piston (4, 4'; 24; 33) is designed as a stepped piston.

3. A mechanism according to Claim 1 or 2, characterized in that the duct (7) passes through the pressure-transfer piston (4, 4') and comprises a spring-loaded non-return valve (8 — 10), which normally blocks the flow from the cylinder chamber of large cross-section (2) to the cylinder chamber of small cross-section (3) and which is mechanically operable in dependence upon the position of the pressure-transfer piston, and in that the pressure-transfer piston (4, 4') is biassed towards its normal position by a spring (11).

4. A mechanism according to Claim 1 or 2, characterized in that two ducts (21, 25) are provided between the two cylinder chambers (19, 20) and each of the two ducts has a spring-loaded non-return valve (22, 23; 26, 27), one non-return valve (22, 23) blocking the flow from the cylinder chamber or large cross-section (19) to the cylinder chamber of small cross-section (20), and the other non-return valve (26, 27) blocking the flow from the cylinder chamber of small cross-section (20) to the cylinder chamber of large cross-section (19), and actuation of the non-return valves being dependent exclusively upon pressure difference.

5. A mechanism according to Claim 4, characterized in that the duct (21), having one of the non-return valves (22, 23), passes through the pressure-transfer piston (24), and the duct (25), having the other non-return valve (26, 27), passes through the closing member (22) of the non-return valve (22, 23).

6. A mechanism according to Claim 1 or 2, characterized in that the duct (30) branches from the cylinder chamber of large cross-section (28) by way of a radial opening (31) in the cylinder block, and the opening (31) is closed or uncovered by the pressure-transfer piston (33) and according to the position of this piston which is biassed by a spring (34) towards its normal position.

**Revendications**

1. Dispositif automatique de réglage et de réajustage à une valeur prescrite du jeu mort (a) d'un système (13 — 18), en particulier d'embrayage ou de freinage, actionné hydrauliquement, dispositif caractérisé par le fait qu'il comporte, insérable dans la conduite sous pression allant de l'élément de command (12) du système (13 — 18) actionné hydrauliquement au maître-cylindre hydraulique (13) de ce dernier (13 — 18), un convertisseur de pression (1) dont la chambre cylindrique de grande section (2, 19, 28) est reliable audit élément de commande (12), et la chambre cylindrique de petite section (3, 20, 29) audit maître-cylindre hydraulique (13), étant prévu entre les deux chambres cylindriques (2, 3; 19, 20; 28, 29) au moins un canal (7; 21, 25; 31) qui est commandé, par un dispositif de soupape (8; 22, 26; 33, 31) chargé en direction de fermeture par un ressort (9; 23, 27; 34), en sorte qu'il soit fermé dans la position de base du piston (4, 4''; 24; 33) du convertisseur de pression et ouvert, en cas d'action de pression exercée sur ledit convertisseur de pression par l'élément de commande (12), après une translation dudit piston de convertisseur par rapport à sa position de base représentant un parcours (b, b', b'') prédéterminé proportionnel à la valeur prescrite du jeu mort (a), ce dispositif de soupape se fermant ensuite, en cas de suppression de la pression, lorsque le piston (4, 4'; 24; 33) du convertisseur de pression est éloigné, par rapport à sa position de base, de la valeur du parcours (b, b', b'') prédéterminé.

2. Dispositif selon la revendication 1 caractérisé par le fait que les deux chambres cylindriques (2, 3; 19, 20; 28, 29) sont formées par un carter cylindrique échelonné et le piston de convertisseur de pression (4, 4'; 24; 33) est établi en piston différentiel.

3. Dispositif selon l'une quelconque des revendications 1 ou 2 caractérisé par le fait que le canal (7) traverse le piston de convertisseur de pression (4, 4') et comporte une soupape de non-retour (8 — 10) soumise à l'action d'un ressort et commandable mècaniquement en fonction de la position dudit piston de convertisseur de pression, laquelle soupape barre normalement l'écoulement de la chambre cylindrique de grande section (2) vers la chambre cylindrique de petite section (3), ledit piston de convertisseur de pression (4, 4') étant chargé en direction de sa position de base par un ressort (11).

4. Dispositif selon l'une quelconque des revendications 1 ou 2 caractérisé par le fait que deux canaux (21, 25) dont chacun comporte une soupape de non-retour (22, 23; 26, 27) soumise à l'action d'un ressort sont prévus entre les deux chambres cylindriques (19, 20), l'une (22, 23) de ces deux soupapes de non-retour barrant l'écoulement de la chambre cylindrique de grande section (19) vers la chambre cylindrique de petite section (20), l'autre (26, 27) l'écoulement de la chambre cylindrique de petite section (20) vers la chambre cylindrique de grande section (19), et la commande desdites soupapes de non-retour étant exclusivement fonction de la pression différentielle.

5. Dispositif selon la revendication 4 caractérisé par le fait que le canal (21) comportant l'une (22, 23) des deux soupapes de non-retour traverse le piston de convertisseur de pression (24) et le canal (25) comportant l'autre soupape de non-retour (26, 27) traverse l'élément de fermeture (22) de la première soupape de non-retour (22, 23).

6. Dispositif selon l'une quelconque des revendications 1 ou 2 caractérisé par le fait que le canal (30) est dérivé à travers une ouverture radiale (31) du carter cylindrique de la chambre cylindrique de plus grande section (28) et cette ouverture (31) est fermée ou libérée en fonction de la position du piston de convertisseur de pression (33) par ce dernier, soumis à l'action d'un ressort (34) en direction de sa position de base.

Fig.1

Fig.2

Fig.3